# EUROPÄISCHE PATENTSCHRIFT

(11) **EP 0 361 155 B1**
(45) Veröffentlichungstag und Bekanntmachung des Hinweises auf die Patenterteilung: **27.04.1994**
(21) Anmeldenummer: 89116466.7
(22) Anmeldetag: 06.09.1989
(51) Int. Cl.: E05B 71/00

(54) **Halterung für ein Langbügelschloss**
Support for a long stirrup lock
Support pour serrure avec traverse allongée

(30) Priorität: 07.09.1988 DE 3830422; 24.04.1989 DE 3913471
(43) Veröffentlichungstag der Anmeldung: 04.04.1990
(73) Patentinhaber: Aug. Winkhaus GmbH & Co. KG, D-48291 Telgte (DE)
(72) Erfinder: Kortenbrede, Ludger, D-4404 Telgte (DE)
(74) Vertreter: Weickmann, Heinrich, Dipl.-Ing.

(56) Entgegenhaltungen:
- EP-A- 0 079 798
- DE-A- 3 038 657
- DE-A- 3 335 662

## Beschreibung

Die Erfindung betrifft eine Kombination einer zweiradrahmenseitigen Kabelschloßhalterung mit einem von dieser betriebsmäßig trennbaren Kabelschloß, wobei an dem einen Ende eines Schließkabels des Kabelschlosses ein in einem Schließwerksgehäuse untergebrachtes Schließwerk angeordnet ist und am anderen Ende des Schließkabels ein mit dem Schließwerk kuppelbares Riegelstück angebracht ist und wobei Schließwerk und Riegelstück im gekuppelten Zustand an der Halterung im wesentlichen unbeweglich festgelegt sind.

Eine solche Halterung für Ringschlösser ist aus der Deutschen Patentschrift 33 35 662 bekannt. Darüberhinaus ist die Verwendung einer Halterung auch bei sogenannten Langbügelschlössern durch offenkundige Vorbenutzung bekannt geworden.

Das Handhaben von Kabelschlössern ist verhältnismäßig schwierig, insbesondere bei unzureichenden Beleuchtungsverhältnissen. Dies rührt daher, daß die Kabelschlösser einerseits in nächster Nähe ihrer Schließteile exakt gehalten und geführt werden müssen, um die Schließteile in gegenseitigen Eingriff bringen und miteinander verrasten zu können, und daß andererseits der exakten relativen Positionierung der Schließteile die exzentrische Gewichtsverteilung des Kabelschlosses mit einem in der Regel weit außerhalb der die Schließteile erfassenden Hände liegendem Schwerpunkt und regelmäßig auch die elastischen Rückstellkräfte entgegenwirken, welche versuchen, das Schließkabel in eine Konfiguration zu bringen, die nicht der bei Verbindung der Schließteile miteinander erzwungenen Konfiguration entspricht.

Bei der aus der DE-A1-33 35 662 bekannten Kombination ist ein Führungsweg der Halterung für die beiden Schließteile nur äußerst kurz bemessen. Deshalb können diese Schließteile beim Zusammenstecken kippen, wodurch die beiden Schließteile nicht mehr miteinander verrastbar sind. Insbesondere bei Dunkelheit kann deshalb das Zweiradschloß nur schwer in der Halterung fixiert werden.

Der Erfindung liegt die Aufgabe zugrunde, die Herstellung der Verbindung zwischen Kabelschloß und Kabelschloßhalterung zu erleichtern.

Zur Lösung dieser Aufgabe wird vorgeschlagen, daß an der Halterung eine drehsichernde und kippsichernde Linearführung zum Zusammenwirken mit einer Linearführungsfläche des Schließwerkgehäuses und eine den Einführungsweg des Schließwerkgehäuses begrenzende Anschlagfläche vorgesehen sind, daß das Riegelstück in einer die Linearführungsrichtung querenden Richtung in das Schließwerk einkuppelbar ist und daß das Schließwerkgehäuse in der Linearführung durch Reibschluß oder durch Anlage des Riegelstücks an einer weiteren Anschlagfläche der Halterung und/oder durch Verrastung gesichert ist.

Durch die Linearführung wird gewährleistet, daß wenigstens ein Schließteil des Schlosses in der Halterung sicher geführt ist und nicht auskippen kann. Durch den im Führungsweg zusätzlich vorgesehenen Anschlag kann darüberhinaus sichergestellt werden, daß wenigstens eines der beiden Schließteile beim Verrasten sich in einer vorbestimmten Position befindet, so daß sich das Kabelschloß auch bei Dunkelheit in der Halterung in einfacher Weise einführen und fixieren läßt.

Die Linearführung kann als Gleitführung oder als reibschlüssige Führung ausgebildet sein. Die Ausbildung mit Reibführung hat den Vorteil, daß die beiden Schließteile bereits außerhalb der Halterung ineinander verrastet werden können, um sie anschließend in bereits geschlossenem Zustand in die Halterung einschieben zu können. Die Linearführung gewährleistet dann, daß das Schloß in der Halterung auch bei der Fahrt sicher fixiert ist und nicht herausfallen kann. Darüberhinaus kann sowohl bei der Gleitführung als auch bei der reibschlüssigen Führung eine zusätzliche Verrastung vorgesehen werden, mittels derer das Schloß zusätzlich in der Halterung gehalten wird.

Handelt es sich um ein Kabelschloß mit Schlüsselbetätigung, so wird dafür gesorgt, daß bei in der Halterung aufgenommenem Schließwerk ein Schlüsselaufnahmeschlitz dieses Schließwerks für die Schlüsseleinführung zugänglich ist, wenn eine Ausführungsform vorgesehen ist, bei welcher das Schließwerkgehäuse in der Linearführung durch Anlage des Riegelstücks an einer weiteren Anschlagfläche gesichert ist und deshalb das Riegelstück zur Entnahme des Schließwerkgehäuses aus der Linearführung voraus von dem Schließwerkgehäuse gelöst werden muß.

Die Linearführung kann beispielsweise als eine Schwalbenschwanzführung ausgebildet sein.

Es ist aber auch denkbar, daß die Linearführung von einer Durchbrechung einer an der Halterung ausgebildeten Positionierungsfläche gebildet ist. Die Linearführung im Sinne der Kippsicherheit wird dann durch entsprechende Länge der Durchbrechung und/oder einer am Schließwerkgehäuse ausgebildeten Führungsfläche erreicht.

Die Durchbrechung kann beispielsweise rechtwinkeligen, vorzugsweise quadratischen, Querschnitt aufweisen.

Bei entsprechender Länge der an dem Schließwerkgehäuse ausgebildeten Führungsfläche kann die Positionierungsfläche von einem Dünnschichtmaterial, vorzugsweise Blech, gebildet sein, welches die Durchbrechung aufweist.

Es ist aber auch denkbar, daß die Positionierungsfläche an einem gespritzten Kunststoffteil ausgebildet ist.

Die weitere Anschlagfläche kann durch die Umfangsfläche einer in der Halterung angeordneten Einführungsbohrung für das Riegelstück gebildet sein. Nach einer anderen Ausführungsform ist es auch möglich, daß die weitere Anschlagfläche an einem an der Halterung angebrachten Steg angeordnet ist. Diese Ausführungsform zeichnet sich durch besondere konstruktive Einfachheit aus. Sie ist unempfindlich gegenüber Soll-Maßabweichungen in der Gestaltung des Schließwerkgehäuses und in der Gestaltung der Halterung. Konstruktiv ist es besonders vorteilhaft, wenn der Steg das Schließwerkgehäuse in einer zur Linearführungsrichtung im wesentlichen orthogonalen Querebene wenigstens teilweise umgreift und dem Riegelstück nur auf dessen in Ausschubrichtung vorderer Seite gegenüberliegt. Eine solche Gestaltung hat neben dem Vorteil der konstruktiven Einfachheit den besonderen ergonomischen Vorteil, daß die Gefahr einer Behinderung des Zusammenkuppelns der Schließteile durch den Steg auf ein Minimum reduziert ist. Dieser Vorteil kann noch weiter dadurch ausgebaut werden, daß der Steg im Bereich des Riegelstücks frei endet.

Bei Anordnung der Positionierungsfläche an der einen Seite eines Dünnschichtmaterials, etwa Blech, kann die weitere Anschlagfläche insbesondere von der der Positionierungsfläche abgelegenen Rückseite des Dünnschichtmaterials gebildet sein, insbesondere dann, wenn das Dünnschichtmaterial eine Durchbrechung aufweist, durch welche der eine Führungsfläche aufweisende Teil des Schließwerkgehäuses hindurchgeschoben wird, und wenn nach erfolgtem Hindurchschieben das Riegelstück in diesen Teil des Schließwerkgehäuses eingeführt und eingerastet wird, so daß es an der Rückseite des Dünnschichtmaterials zur Anlage kommt.

Bei einer Ausführungsform, bei der die Linearführung von einer Durchbrechung einer an der Halterung ausgebildeten Positionierungsfläche gebildet ist, kann der sichere und wackelfreie Halt des Schlosses dadurch verbessert werden, daß die Positionierungsfläche entsprechend einer Anlagefläche des Schließwerkgehäuses muldenförmig ausgebildet ist, so daß sich eine verbesserte Schmiegung zwischen dem Führungsgehäuse und der Positionierungsfläche ergibt.

Es besteht die Möglichkeit, die Halterung zur Durchführung des Schließkabels geschlitzt auszuführen. Die Verbindung zwischen Kabelschloß und Halterung geschieht dann in der Weise, daß man zuerst das Schließkabel durch den Schlitz hindurch in die Halterung einführt und dann das Schließwerkgehäuse in Kabellängsrichtung und damit in Längsrichtung der Halterung zum Eingriff mit der Halterung, d. h. mit der Linearführung bringt. Eine derartige Ausgestaltung sieht zwar auf den ersten Blick ergonomisch nachteilig aus; sie ist es aber nicht, weil der Schlitz in der Halterung leicht ertastet werden kann und deshalb für das einzuführende Schließkabel leicht zuganglich ist. Andererseits hat diese Ausführungsform den Vorteil, daß das Schließwerkgehäuse auf großer Länge in Richtung der Linearführung von der Halterung erfaßt und daher wackelfrei gelagert werden kann. Darüberhinaus ist sogar eine gewisse Verliersicherheit dann noch gewährleistet, wenn das Riegelstück sich während der Fahrt unbeabsichtigterweise aus dem Schließwerkgehäuse lösen sollte, etwa deshalb, weil es unsachgemäß mit dem Schließwerkgehäuse gekuppelt worden ist.

Die Halterung kann an dem Zweiradrahmen durch lösbare Befestigungsmittel befestigt sein, deren Lösung bei Verbindung des Kabelschlosses mit der Halterung unterbunden ist. Durch diese Maßnahme wird erreicht, daß für Unbefugte ein Lösen der Halterung von dem Zweiradrahmen erschwert oder unmöglich gemacht ist, weil diesen Unbefugten ja der Schlüssel oder das Schließgeheimnis nicht zur Verfügung steht, welches Voraussetzung für die Trennung von Schließwerkgehäuse und Schließriegel ist, so daß die Befestigungsmittel dem Unbefugten nicht zugänglich sind. Dieses Prinzip kann beispielsweise so verwirklicht werden, daß die Befestigungsmittel eine mit der Halterung durch mindestens eine, vorzugsweise zwei, Befestigungsschrauben verbindbare Teilringschelle umfassen, wobei Drehangriffsstellen dieser Befestigungsschrauben bei Verbindung des Kabelschlosses mit der Halterung abgedeckt sind.

Eine Möglichkeit der Befestigung besteht auch darin, daß zwischen zwei Klemmsegmenten einer Klemmschelle mindestens eine Hülse einfügbar ist, durch die wenigstens eine Klemmschraube beim Verspannen hindurchtritt. Diese Gestaltung erlaubt es, durch Einfügen der Hülse eine Anpassung an ein Rahmenrohr großen Durchmessers vorzunehmen und durch Unwirksammachen der Hülse eine entsprechende Anpassung an ein Rahmenrohr kleineren Durchmessers vorzunehmen. Insbesondere ist es dabei möglich, daß die mindestens eine Hülse mit einem Klemmsegment über ein Scharnier ggf. abtrennbar verbunden ist. Auf diese Weise steht die Hülse bis zum Zeitpunkt des Bedarfs bzw. Nichtbedarfs unverlierbar zur Verfügung.

Wenn die Halterung aus einem Dünnschichtmaterial besteht, so kann ihre Zugänglichkeit und ihre raumformmäßige Anpassung an die Gestaltung des jeweiligen Zweiradrahmens dadurch verbessert werden, daß der Befestigungsabschnitt im Verhältnis zu einem der Aufnahme des Schlosses dienenden Aufnahmeabschnitts verdrillt ist.

Wenn auch der Befestigungsabschnitt aus Flachmaterial besteht, so kann er mit einer Durchgangsöffnung versehen sein. Um dann ein unbeabsichtigtes Verdrehen des Befestigungsabschnitts um die Achse dieser Durchgangsöffnung zu vermeiden, kann man radial anschließend an diese Durchgangsöffnung eine Kerbe vorsehen, die mite inem entsprechend geformten Teil des Fahrradrahmens oder der Befestigungsmittel als Verdrehsicherung zusammenwirkt.

Bei der erfindungsgemäßen Lösung ist in jedem Fall durch die Linearführung gewährleistet, daß wenigstens ein Schließteil des Kabelschlosses in der Halterung sicher geführt ist. Durch die im Führungsweg vorgesehene Anschlagfläche kann dabei sichergestellt werden, daß wenigstens eines der beiden Schließteile beim Verrasten sich in einer vorbestimmten Position befindet. Hierdurch läßt sich ein Fahrradschloß auch bei Dunkelheit in eine Halterung in einfacher Weise einführen und fixieren.

Die Halterung kann am Zweiradrahmen auch fest geschweißt sein. Es kann aber vorteilhaft sein, die Halterung lösbar am Rahmen anzubringen, so daß sie auch im Wege der Nachrüstung angebracht werden kann. Dabei ist es denkbar, die Halterungen allein nachzurüsten, so daß ein bereits im Besitz des Fahrzeughalters befindliches Schloß am Zweiradrahmen während der Fahrt festgelegt werden kann.

Die Erfindung wird anhand der nachstehenden Zeichnungsfiguren erläutert. Es zeigen:
- Fig. 1: eine im Rahmen der Erfindung anwendbare Ausbildung der Befestigung einer Halterung an einem Zweiradrahmen;
- Fig. 2: einen Schnitt nach Linie II-II der Fig. 1;
- Fig. 3: einen Querschnitt durch eine erfindungsgemäße Kombination aus einem Halter und einem Zweiradschloß;
- Fig. 4: einen Schnitt entlang der Linie IV-IV in Fig. 3;
- Fig. 5: eine Ansicht einer weiteren Ausführungsform der erfindungsgemäßen Kombination;
- Fig. 6: einen Schnitt entlang der Linie VI-VI in Fig. 5;
- Fig. 7: eine perspektivische Darstellung eines weiteren Ausführungsbeispiels der erfindungsgemäßen Kombination;

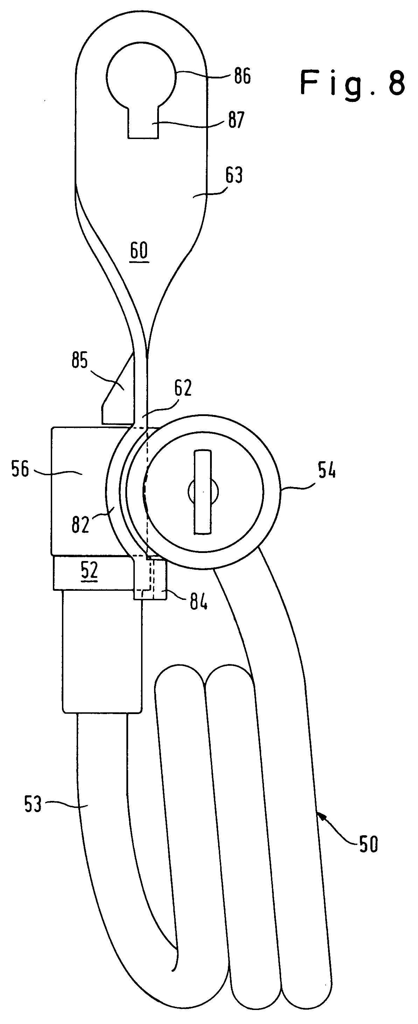

- Fig. 8: eine Seitenansicht der in Fig. 7 dargstellten Kombination;
- Fig. 9: eine Ansicht eines weiteren Ausführungsbeispiels der erfindungsgemäßen Kombination;
- Fig. 10: einen Schnitt entlang der Linie X-X in Fig. 9;
- Fig. 11: eine Draufsicht auf den in Fig. 9 dargestellten Halter;
- Fig. 12: eine Ansicht einer weiteren Ausführungsform der erfindungsgemäßen Kombination;
- Fig. 13: einen Schnitt entlang der Linie XIII-XIII in Fig. 12;
- Fig. 14: einen Querschnitt durch ein weiteres Ausführungsbeispiel der erfindungsgemäßen Kombination;
- Fig. 15: einen Schnitt entlang der Linie XV-XV in Fig. 14;
- Fig. 16: eine Ansicht einer weiteren Ausführungsform der erfindungsgemäßen Kombination;
- Fig. 17: einen Schnitt entlang der Linie XVII-XVII in Fig. 16.

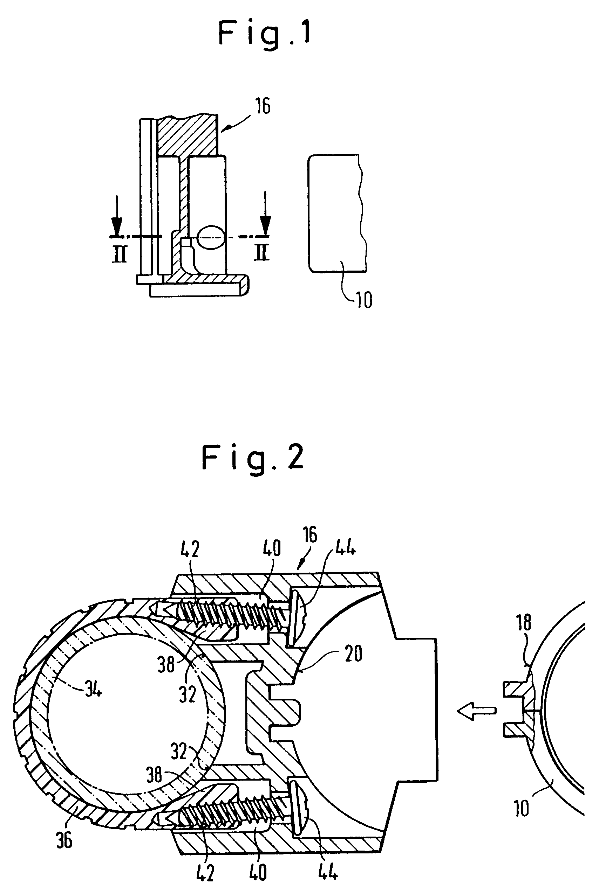

Gemäß Figuren 1 und 2 ist an der Rückseite einer Halterung 16 eine Rille 32 definiert, die zur Anlage an einem Rahmenrohr eines Fahrzeugs, insbesondere eines Motorrades bestimmt ist; ein solches Rahmenrohr ist in Figur 2 mit 34 bezeichnet. Eine Kunststoffbandage 36 taucht mit ihren verdickten Enden 38 in je eine Tasche 40 der Halterung 16 ein und wird durch selbstschneidende Klemmschrauben 42 gespannt, deren Köpfe 44 versenkt unter einer Lagerpfanne 20 liegen, derart, daß sie bei eingesetztem Schloßkörper 10 durch dessen Endwand 18 verdeckt sind.

In den Zeichnungsfig. 3 und 4 ist eine Kombination aus einem Kabelschloß 50 mit zwei miteinander verriegelbaren Schließteilen 51, 52 und einer Halterung 60 nach den Ansprüchen 14 bis 22 dargestellt.

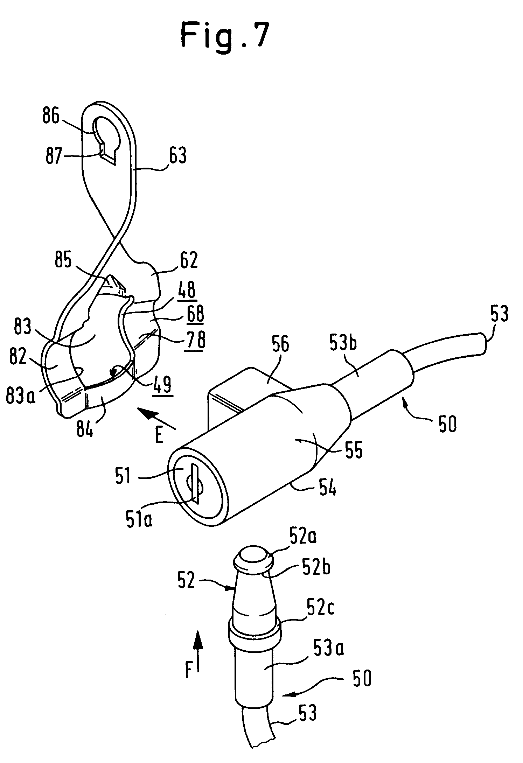

Die beiden Schließteile 51, 52 des Kabelschlosses 50 werden durch ein nicht näher gezeigtes Schließwerk 51 sowie durch ein Riegelstück 52 gebildet (vergl. Fig. 7). Das vorzugsweise aus Druckguß hergestellte Riegelstück 52 besitzt im wesentlichen die Form eines Zylinders, an dessen einer Stirnseite eine Einführschräge 52a vorgesehen ist, an die sich eine Verrastungsfläche 52b anschließt. Außerdem weist das Riegelstück 52 eine Erweiterung 52c auf. An dem anderen stirnseitigen Ende des Riegelstücks 52 ist über eine Quetschtülle 53a ein Schließkabel 53 angebracht. Das Schließkabel 53 ist mit seinem anderen Ende ebenfalls über eine Quetschtülle 53b an einem ebenfalls vorzugsweise aus Druckguß hergestellten Schließwerksgehäuse 54 für das Schließwerk 51 befestigt. Das Schließwerksgehäuse 54 besitzt eine im wesentlichen zylindrische Form, die sich zur Quetschtülle 53b hin verjüngt. An der der Quetschtülle 53b gegenüberliegenden Stirnseite Schließwerksgehäuses 54 mündet ein Schlüsselaufnahmeschlitz 51a des Schließwerkes 51 für einen nicht gezeigten Betätigungsschlüssel. Auf seiner Mantelfläche 55 ist dem Schließwerksgehäuse 54 ein im wesentlichen quaderförmiger Steckführungsblock 56 angeformt. Dieser Steckführungsblock 56 weist einen Steckführungskanal 57 auf, dessen Kanalachse tangential zum kreisförmigen Querschnitt des Schließwerksgehäuses 54 verläuft. Zum Verriegeln des Kabelschlosses 50 wird das Riegelstück 52 in den Steckführungskanal 57 des Steckführungsblockes 56 soweit eingeführt, bis die Verrastungsfläche 52b mit einem Verriegelungselement des Schließwerkes 51 automatisch verrastet. Zum Öffnen des Kabelsschlosses 50 wird der Betätigungsschlüssel über den Schlüsselaufnahmeschlitz 51a in das Schließwerk 51 eingeführt und um eine bestimmte Drehbewegung aus seiner Einführungslage ausgelenkt. Hierdurch gibt das Verriegelungselement das Riegelstück 52 frei, so daß dieses aus dem Steckführungskanal 57 herausgezogen werden kann.

Für die Erfindung ist es nicht wesentlich, daß das Schloß 50 in der geschilderten Art und Weise aufgebaut ist. Es ist auch jede andere Kabelschloßform mit zwei gegeneinander verschließbaren Schließteilen denkbar. Unter Kabelschloß wird auch ein Zweiradschloss mit einer in einer Kunststoffhülle angeordnete Kette oder dergl. verstanden.

Die vorzugsweise aus Kunststoff hergestellte, insbesondere gespritzte, Halterung 60, ist durch eine Trennwand 61 in einen Aufnahmeabschnitt 62 und einen Befestigungsabschnitt 63 aufgeteilt. Der Aufnahmeabschnitt 62 besitzt eine Durchgangsbohrung 64, die sich nach einem Absatz 65 radial erweitert. Die radiale Erweiterung 66 besitzt einen im wesentlichen quadratischen Querschnitt. Die Innenmaße der Durchgangsbohrung 64 und der radialen Erweiterung 66 entsprechen dabei den Außenmaßen des zylindrischen Gehäuses 54 und des Steckführungsblockes 56 des Schlosses 50. Der Aufnahmeabschnitt 62 weist außerdem eine Einführungsbohrung 67 auf, die in die radiale Erweiterung 66 mündet. Die Bohrungsachse der Einführungsbohrung 67 verläuft dabei tangential zu der Innenwand der Durchgangsbohrung 64. Die Mantelfläche 64a der Durchgangsbohrung 64 und die der Mantelfläche 64a gegenüberliegende Innenfläche 66a der Erweiterung 66 bilden zusammen mit der Mantelfläche 55 des Gehäuses 54 sowie der Außenfläche 56a des Steckführungsblockes 56 die Linearführung 48. Besondere die Linearführung 48 bildende Führungsmittel brauchen deshalb bei diesem Ausführungsbeispiel nicht vorgesehen werden. Gleichzeitig bilden sie eine Positionierungsfläche 68 für das Schließwerksgehäuse 54. Der Absatz 65 liefert einen Anschlag 78 für den Einführungsweg.

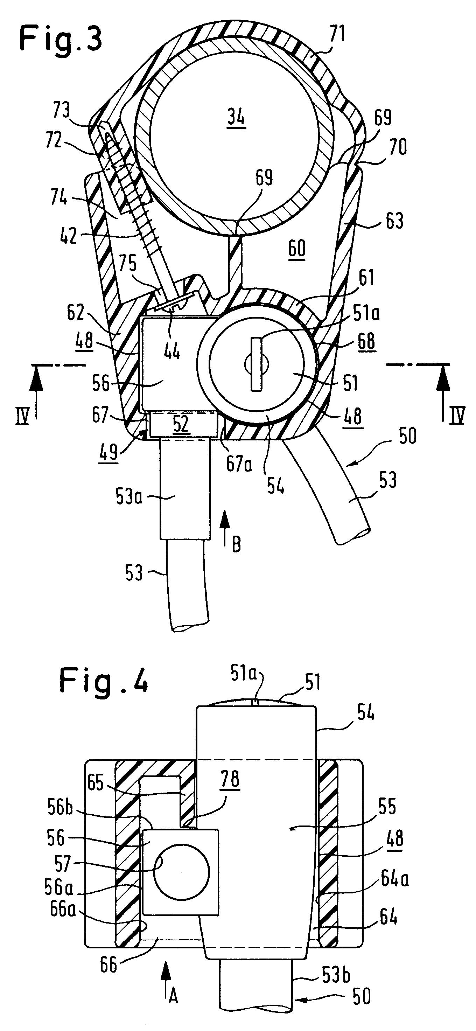

Zum Haltern des Schlosses 50 wird das Schließwerksgehäuse 54 in Richtung des Pfeiles A in Fig. 4 in die Halterung 60 soweit eingeführt, bis die Außenwand 56b des Steckführungsblocks 56 an dem Anschlag 78 anliegt. Hierdurch fluchtet die Bohrungsachse der Einführungsbohrung 67 mit der Kanalachse des Steckführungskanals 57. Zum Verrasten kann dann das Riegelstück 52 in Richtung des Pfeils B in Fig. 3 durch die Einführungsbohrung 67 in den Steckführungskanal 57 eingeführt werden. Wird versucht, nach dem Verrasten des Riegelstücks 52 mit dem Verriegelungselement des Schließwerks 51 das Gehäuse 54 entgegen der Einführbewegung aus der Halterung, 60 herauszuziehen, so schlägt das Riegelstück 52 an der eine weitere Anschlagfläche bei 49 bildenden Umfangsfläche 67a der Einführungsbohrung 67 an und verhindert somit das weitere Herausziehen des Schließwerksgehäuses 54. Damit das Schloß 50 aus der Halterung 60 herausgenommen werden kann, wird der Betätigungsschlüssel für das Schließwerk 51 in den Schlüsselaufnahmeschlitz 51a eingeführt und um eine vorbestimmte Bewegung aus seiner Einführlage ausgelenkt. Hierdurch wird das Riegelstück 52 freigegeben, so daß dieses aus dem Steckführungskanal 57 und der Einführungsbohrung 67 herausgezogen werden kann. Anschließend kann das Schließwerksgehäuse 54 des Schlosses 50 aus der Halterung 60 entnommen werden.

Der in den Zeichnungsfig. 3 und 4 gezeigte Befestigungsabschnitt 63 der Halterung 60 ist zur Anlage an dem Rahmenrohr 34 mit Anlagerippen 69 versehen. Diese verlaufen zum einen in Umfangsrichtung und zum anderen in axialer Richtung des Rahmenrohres 34. Über ein Scharnier 70 ist der Befestigungsabschnitt 63 mit einer Kunststoffbandage 71 verbunden, mittels derer die Halterung 60 an dem Rahmenrohr 34 festgeklemmt werden kann. Hierzu weist die Kunststoffbandage 71 an ihrem freien Ende eine Verdickung 72 auf, die mit einer Bohrung 73 versehen ist und in eine Tasche 74 der Halterung 60 eintaucht. In diese Bohrung 73 kann eine mit einem selbstschneidenden Gewinde versehene Schraube 42 eingedreht werden. Hierzu wird die Schraube 42 durch eine Durchgangsbohrung 75 der Trennwand 61 hindurchgeführt und in die Bohrung 73 eingedreht, wobei sich der Schraubenkopf 44 der Schraube 42 an der Trennwand 61 abstützt. Zum Festziehen der Schraube 42 kann dabei durch die Einführungsbohrung 67 der Halterung 60 ein nicht gezeigter Schraubendreher eingeführt werden. Ist das Schloß 50 in der Halterung 60 eingesetzt, so ist die Schraube 42 nicht mehr zugänglich.

Ein weiteres Ausführungsbeispiel der erfindungsgemäßen Kombination aus Schloß 50 und Halterung 60 ist in den Zeichnungsfig. 5 und 6 gezeigt. Das Schloß 50 ist dabei mit dem in den Zeichnungsfig. 3 und 4 gezeigten und beschriebenen Schloß identisch. Die mit der in den Zeichnungsfig. 3 und 4 gezeigten und beschriebenen Ausführungsformen identischen Elemente des weiteren Ausführungsbeispieles weisen dabei die gleichen Bezugszeichen auf.

Die vorzugsweise aus Kunststoff, insbesondere gespritzte Halterung 60, ist wiederum durch die Trennwand 61 in den Aufnahmeabschnitt 62 und in den Befestigungsabschnitt 63 aufgeteilt. Der Aufnahmeabschnitt 62 besitzt die Form eines Hohlquaders, mit Innenraum 76. Eine sich an die Trennwand 61 anschließende Außenseite 62a des Aufnahmeabschnitts 62 ist konkav nach innen gewölbt und dient als muldenförmige Positionierungsfläche 68 für das Gehäuse 54. Diese Außenseite 62a besitzt eine Durchbrechung 77 zu dem Innenraum 76, die ebenfalls einen quadratischen Querschnitt aufweist. Die Umfangsflächen 77a der Durchbrechung 77 bilden bei diesem Ausführungsbeispiel zusammen mit den Außenwänden des Steckführungsblockes 56 die Linearführung 48. Die Maße des Innenraums 76, der Druchbrechung 77 und der konkav nach innen gewölbten Außenfläche 62a des Aufnahmeabschnitts 62 entsprechen dabei den Außenmaßen des Steckführungsblockes 56 und des zylindrischen Schließwerksgehäuses 54. Die der Trennwand 61 diametral gegenüberliegende Außenseite 62b des Aufnahmeabschnitts 62 weist die Einführungsbohrung 67 auf.

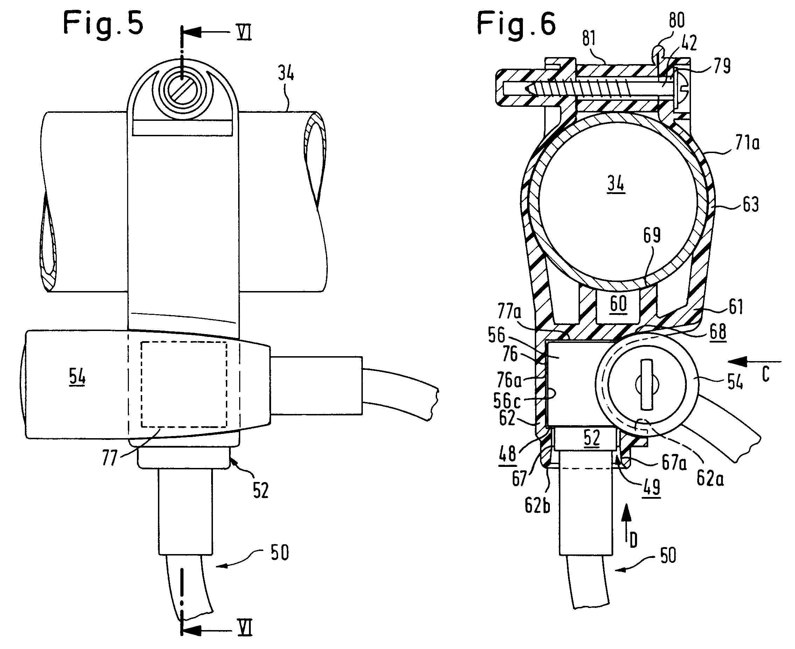

Zum Festlegen des Schließwerksgehäuses 54 in der Halterung 60 wird dieses zunächst mit dem Steckführungsblock 56 voraus in Pfeilrichtung C der Zeichnungsfig. 6 in die Halterung 60 eingeführt, bis die Außenwand 56c des Steckführungsblockes 56 gegen die Wand 76a läuft. Ebenso besteht aber auch die Möglichkeit, daß die konkave Außenseite 62a des Aufnahmeabschnitts 62 als Anschlag 78 vorgesehen wird. Anschließend wird das Riegelstück 52 durch die Einführungsbohrung 67 in den Steckführungskanal 57 in Pfeilrichtung D der Fig. 6 soweit eingeführt, bis es dort verriegelt ist. Wird das Schließwerksgehäuse 54 dann aus der Halterung 60 entgegen der Einführungsrichtung herausgezogen, so schlagt die Umfangsfläche des Riegelstücks 52 bei 49 an der den zweiten Anschlag bildenden Umfangsfläche 67a der Einführungsbohrung 67 an. Das Schließwerksgehäuse kann dann nicht mehr weiter herausgezogen werden. Um es aus der Halterung 60 herauszinnehmen, muß wiederum zuerst das Riegelstück 52 freigegeben werden.

In den Fig. 5 und 6 ist ein weiteres Ausführungsbeispiel der Befestigungseinrichtung dargestellt. Der Befestigungsabschnitt 63 der Halterung 60 weist in Längsrichtung des Rahmenrohres 34 verlaufende Anlagerippen 69 auf und ist bei diesem Ausführungsbeispiel als Klemmschelle 71a ausgebildet. Die Klemmschelle 71a wird wiederum durch wenigstens eine Schraube 42 verspannt, die tangential zu dem Rahmenrohr 34 angeordnet ist. An der Durchgangsbohrung 79 der einen Klemmschellenhälfte ist über ein Scharnier 80 eine Kunststoffhülse 81 angeformt. Je nach Durchmesser des Rahmenrohres 34 kann diese Kunststoffhülse zwischen den beiden Klemmschellenhälften eingeschwenkt oder aber entfernt werden.

In den Zeichnungsfig. 7 und 8 ist ein weiteres Ausführungsbei spiel einer Kombination aus einem Schloß 50 und einer Halterung 60 gezeigt. Das Schloß 50 entspricht wiederum dem in den Zeichnungsfig. 3 und 4 gezeigten und beschriebenen Schloß. Auch sind hier wieder funktionsgleiche Elemente mit den gleichen Bezugszeichen wie in den Zeichnungsfig. 3 bis 6 zeichnet.

Die Halterung 60 ist bei diesem Ausführungsbeispiel aus einem Dünnschichtmaterialstreifen, vorzugsweise Blech, mit abgerundeten Ecken hergestellt und weist wiederum den Aufnahmeabschnitt 62 und den Befestigungsabschnitt 63 auf. Der Aufnahmeabschnitt 62 ist mit einer quer zur Erstreckungsrichtung des Dünnschichtmaterialstreifens verlaufende Senke 82 versehen, die der Außenkontur des Schließwerksgehäuses 54 angepaßt ist und als Positionierungsfläche 68 für dieses Gehäuse 54 dient. In seiner Mitte weist der Aufnahmeabschnitt 62 eine Durchbrechung 83 auf, die im wesentlichen einen quadratischen Querschnitt besitzt. Die Umfangsflächen 83a der Durchbrechung 83 bilden bei diesem Ausführungsbeispiel zusammen mit den Außenwänden des Steckführungsblockes 56 die Linearführung 48. An seinem, dem Befestigungsabschnitt 63 gegenüberliegenden Ende besitzt der Aufnahmeabschnitt 62 eine in die entgegengesetzte Richtung zu der Senke 82 weisende Aufwölbung 84. Dieser Aufwölbung 84 diametral gegenüber ist eine in die Richtung der Senke 82 weisende Ausformung 85 angebracht, die als Drehsicherung für das Schloßgehäuse 54 bei eingesetztem Schließwerksgehäuse 54 dient.

Zur Fixierung des Schließwerksgehäuses 54 in der Halterung 60 wird zunächst das Schließwerksgehäuse 54 in Richtung des Pfeiles E mit dem Steckführungsblock 56 voraus in die Durchbrechung 83 der Halterung 60 soweit eingeführt, bis die Mantelflache 55 des Schließwerksgehäuses 54 an der als Anschlag 78 dienenden Senke 82 anliegt. Dabei kann die Senke 82 so ausgeformt sein, daß nur der zur Quetschtülle 53b weisende Abschnitt an der Senke 82 anliegt. Weiterhin besteht die Möglichkeit, an der Senke 82 einen separaten Anschlag 78 vorzusehen, der die Einführbewegung begrenzt. Anschließend wird in Richtung des Pfeiles F in Fig. 7 das Riegelstück 52 in den Steckführungskanal 57 bis zur Verrastung eingeschoben. Auch hier wird der Versuch, das Schloßgehäuse 54 entgegen der Einführungsbewegung aus der Halterung 60 herauszuziehen, dadurch verhindert, daß das Riegelstück 52 bei 49 an die als zweiter Anschlag dienende Aufwölbung 84 anschlägt. Erst durch die Verwendung des Betätigungsschlüssels läßt sich das Schloß 50 aus der Halterung 60 herausnehmen.

Der im Verhältnis zu dem Aufnahmeabschnitt 62 um 90° verdrehte Befestigungsabschnitt 63 ist durch eine Lasche mit einer zentrischen Bohrung 86 gebildet. Mittels der Bohrung 86 kann die Halterung 60 beispielsweise an den Sattelschrauben eines Fahrrades befestigt werden. Die Bohrung 86 weist eine in radialer Richtung sich erstreckende Kerbe 87 auf, die mit entsprechend geformten Mitteln an dem Rahmen 34 des Zweirades als Verdrehsicherung wirkt.

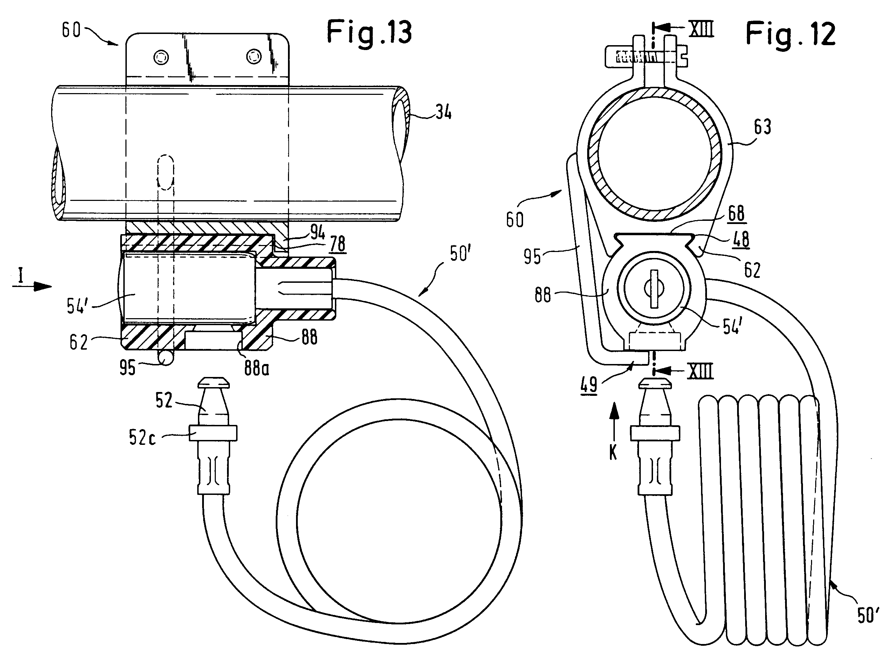

Ein weiteres Ausführungsbeispiel der erfindungsgemäßen Kombination ist in den Zeichnungsfig. 9 bis 11 dargestellt. Hierbei wird ein von dem in den Zeichnungsfig. 3 und 4 gezeigten und beschriebenen Schließwerksgehäuse 54 sich unterscheidendes Schließwerksgehäuse 54' verwendet. Der Unterschied besteht darin, daß der Steckführungskanal 57 nicht in einem Steckführungsblock 56 angeordnet ist, sondern direkt in dem Zylindrischen Schließwerksgehäuse 54'. Dieses Schließwerksgehäuse 54' ist dabei vollständig von einer Kunststoffkappe 88 umhüllt. Die Kunststoffkappe 88 kann entweder aufgeschrumpft oder durch sonstige Befestigungsmittel an dem Schließwerksgehäuse 54' angebracht sein. An der Mündung des Steckführungskanals 57 weist die Kunststoffkappe 88 eine Bohrung 88a auf, (vgl. Fig. 13), durch die das Riegelstück 52 durch die Kappe 88 hindurchgeführt werden kann. Die Bohrung 88a ist dabei so dimensioniert, daß sie die Erweiterung 52c des Riegelstückes 52 aufnehmen kann. Die Kunststoffkappe 88 besitzt schwalbenschwanz förmige Führungsmittel 89, die sich in Längsrichtung des Schloßgehäuses 54' erstrecken. Das Riegelstück 52 und das Schließwerk 51 entsprechen bei diesem Schloß 50' den in den Zeichnungsfig. 3, 4 und 7 gezeigten gleichnumerierten Teilen.

Die Halterung 60 ist aus einem Dünnschichtmaterialstreifen, vorzugsweise Blech, hergestellt und weist wiederum den Aufnahmeabschnitt 62 und den Befestigungsabschnitt 63 auf. Der Befestigungsabschnitt 63 entspricht dabei dem Befestigungsabschnitt 63, der in den Zeichnungsfig. 7 und 8 gezeigt und beschrieben worden ist.

Der Aufnahmeabschnitt 62 ist an seinen Rändern in Richtung seiner Längserstreckung mit Führungsmitteln 90 versehen, die zusammen mit den Führungsmitteln 89 der Kunststoffkappe 88 des Gehäuses 54' die Linearführung 48 bilden. Im Querschnitt weist die Linearführung die Form eines Schwalbenschwanzes auf. Die zu den Führungsmitteln 90 hinweisende Oberfläche des Aufnahmeabschnitts 62 bildet dabei die Positionierungsfläche 68 für das Gehäuse 54'. Von dieser Oberfläche aus erstreckt sich eine Durchgangsbohrung 91, in die das Riegelstück 52 eingeführt wird. Der Führungsweg der Linearführung 48 wird durch den Anschlag 78 begrenzt, der durch eine Ausformung im Dünnschichtmaterialstreifen gebildet ist. An seinem den Befestigungsabschnitt 63 diametral gegenüberliegenden Ende besitzt der Aufnahmeabschnitt 62 eine die Einführbewegung der Kunststoffkappe 88 des Schließwerksgehäuses 54' erleichternde Einführschräge 93.

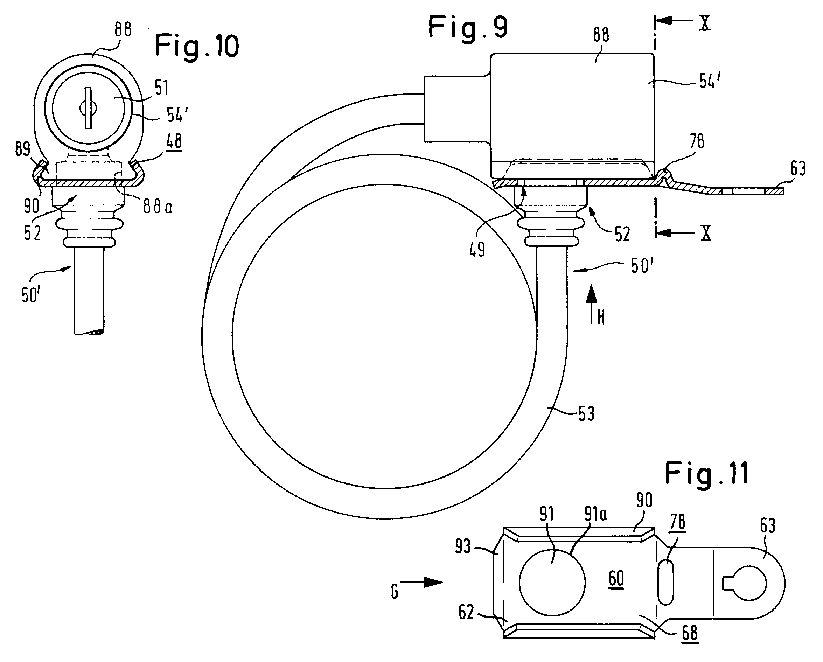

Damit das Schloß 50' in der Halterung 60 fixiert werden kann, wird zunächst das Schließwerksgehäuse 54' zusammen mit der Kunststoffkappe 88 in Richtung des Pfeiles G der Zeichnungsfig. 11 in die Halterung 60 soweit eingeführt, bis die Kunststoffkappe 88 an dem durch die Ausformung des Dünnschichtmaterialstreifens gebildeten Anschlag 78 anliegt. Anschließend wird das Riegelstück 52 in Richtung des Pfeiles H in Fig. 9 durch die Bohrung 91 in den Steckführungskanal des Schließwerksgehäuses 54 bis zur Verriegelung eingeführt. Wird dann das Schließwerksgehäuse entgegen der Einführbewegung aus der Halterung 60 herausgezogen, schlägt das Riegelstück 52 bei 49 ander Umfangsfläche 91a der Bohrung 91 an und verhindert so, daß das Schließwerksgehäuse 54' weiter aus der Halterung 60 herausgezogen werden kann. Auch hier kann das Schloß 50' nur durch die Verwendung des Betätigungsschlüssels aus der Halterung 60 entnommen werden.

Ein weiteres Ausführungsbeispiel der erfindungsgemäßen Kombination aus Schloß 50' und Halterung 60 ist in den Zeichnungsfig. 12 und 13 gezeigt. Das hierbei verwendete Schloß entspricht dabei dem in den Zeichnungsfig. 9 bis 11 gezeigten und beschriebenen Schloß 50'. Die die gleichen funktionalen Elemente bezeichnenden Bezugszeichen entsprechen denen der Zeichnungsfig. 3 bis 11.

Die vorzugsweise aus Blech hergestellte Halterung 60 weist wiederum den Befestigungsabschnitt 63 und den Aufnahmeabschnitt 62 auf. Der Befestigungsabschnitt 63 entspricht dem des in den Zeichnungsfig. 5 und 6 beschriebenen Ausführungsbeispiels. Der Aufnahmeabschnitt 62 ist ebenso wie in dem Ausführungsbeispiel der Fig. 9 bis 11 mit einer Schwalbenschwanzführung versehen, die mit entsprechend gestalteten Führungsmitteln an der Kunststoffkappe 88 als Linearführung 48 zusammenwirkt. Als Positionierungsfläche 68 dient die Fläche zwischen den Schwalbenschwanzführungen. Als Anschlag 78 dient ein in den Führungsweg hineinragender Absatz 94. Damit das Schloß 50' im verriegelten Zustand nicht aus der Halterung 60 herausgezogen werden, kann, ist ein Steg 95 vorgesehen, der das Schließwerksgehäuse 54' zusammen mit der Kunststoffkappe 88 umfaßt und bis zur Einführungsbohrung 88a für das Riegelstück 52 reicht. Der Steg 95 kann dabei, wie in Fig. 12 gezeigt, die Kunststoffkappe 88 nur teilweise oder aber vollständig umfassen. Ebenso ist es möglich, die Halterung 60 dieses Ausführungsbeispiels ohne den Steg 95 vorzusehen und sie beispielsweise mit einer reibschlüssigen Linearführung 48 auszustatten. Ebenso ist es möglich zur Erleichterung der Einführung eine Einführschräge vorzusehen.

Zum Haltern des Schlosses 50' in der Halterung 60 wird das Schließwerksgehäuse 54' zunächst in Pfeilrichtung I in Zeichnungsfig. 13 in die Halterung 60 soweit eingeführt, bis die Kunststoffkappe 88 an den Absatz 94 anschlägt. Anschließend kann das Riegelstück 52 durch die Bohrung 88a in den Steckführungskanal (siehe 57 im Fig. 4) bis zur Verrastung eingeführt werden. Wird das Schließwerksgehäuse 54' anschließend aus der Halterung 60 entgegen der Einführbewegung herausgezogen, so läuft das Riegelstück 52 bei 49 gegen den Steg 95 an. Um das Schloß aus der Halterung 60 herausnehmen zu können, muß der Betätigungsschlüssel verwendet werden.

Der Befestigungsabschnitt 63 ist durch eine an sich bekannte Klemmschelle gebildet, kann aber auch durch jede bereits beschriebene oder noch zu beschreibende Befestigungseinrichtung ersetzt werden.

In den Zeichnungsfig. 14 und 15 ist ein weiteres Ausführungsbeispiel einer erfindungsgemäßen Kombination aus dem Schloß 50' und einer Halterung 60 entnehmbar. Das Schloß 50' entspricht dabei im wesentlichen dem in den Zeichnungsfig. 9 bis 11 beschriebenen Schloß 50' mit dem Unterschied, daß das Riegelstück 52' nach der Erweiterung 52c' eine weitere Aufweitung 52d' aufweist. Ebenso wie in den bisherigen Beschreibungen von Ausführungsbeispielen sind auch hier funktionsgleiche Elemente mit gleichen Bezugszeichen versehen.

Die vorzugsweise aus Kunststoff hergestellte, insbesondere gespritzte Halterung 60 besitzt bei diesem Ausführungsbeispiel einen im wesentlichen ovalen Querschnitt, der durch die Trennwand 61 in den Aufnahmeabschnitt 62 und den Befestigungsabschnitt 63 aufgeteilt ist. Der Aufnahmeabschnitt 62 weist einen symmetrisch angeordneten, in Richtung des Rahmenrohres 34 verlaufenden und durchgehenden Schlitz 96 auf, der eine mittig angeordnete, rotationssymmetrische Erweiterung 97 besitzt. Die Symmetrieachse der Erweiterung 97 schneidet dabei im Winkel von 90° die Symmetrieachse des Schlitzes 96. Diametral gegenüber dem Schlitz 96 weist der Aufnahmeabschnitt 62 im Inneren die Positionierungsfläche 68 für das mit der Kappe 88 versehene Schließwerksgehäuse 54' auf. An den sich daran anschließenden Seitenwänden ist der Aufnahmeabschnitt 62 mit Führungsmitteln 98 versehen, die mit entsprechend geformten Führungsmitteln 99 der Kappe 88 die Linearführung 48 bilden. Im Inneren weist der Aufnahmeabschnitt 62 einen Absatz 100 auf, der als Anschlag 78 den Führungsweg begrenzt.

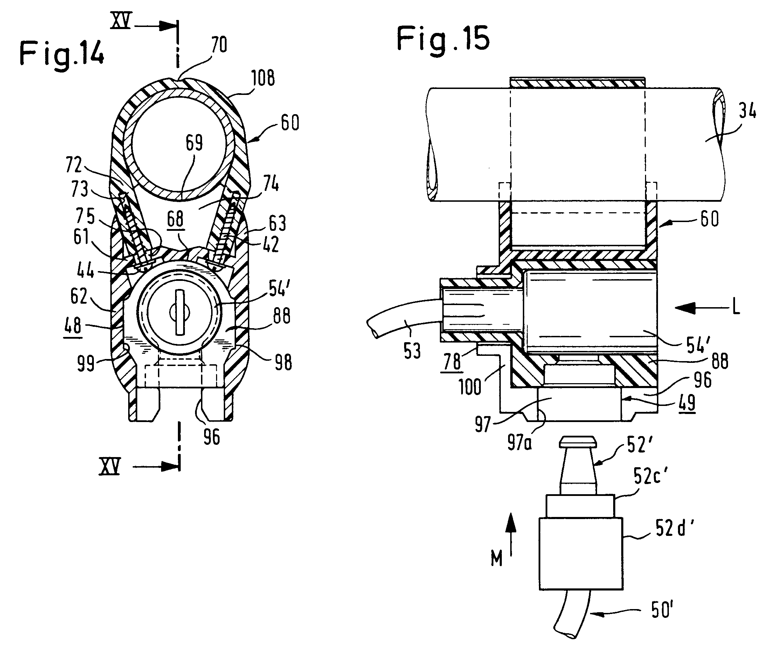

Zur Fixierung des Schließwerksgehäuses 54' in der Halterung 60 wird zunächst das Kabel 53 durch den Schlitz 96 in die Halterung 60 eingefädelt. Anschließend wird das mit der Kunststoffkappe 88 versehene Schließwerksgehäuse 54' in Richtung des Pfeiles L in Zeichnungsfig. 15 in die Halterung 60 eingeführt, bis die Kunststoffkappe 88 gegen den als Anschlag 78 wirkenden Absatz 100 anliegt. Anschließend wird das Riegelstück 52' durch die Erweiterung 97 in Richtung des Pfeiles M in Fig. 15 in den Steckführungskanal (siehe 57 in Fig 4) eingeführt und verriegelt. Bei diesem Ausführungsbeispiel läuft die Aufweitung 52d' des Riegelstücks 52' bei 49 gegen die Umfangsfläche 97a der Erweiterung 97 an, sobald versucht wird, das Schloß 50' aus der Halterung 60 herauszuziehen. Auch hier kann das Schloß 50' nur unter Verwendung des Betätigungsschlüssels aus der Halterung 60 entnommen werden.

In den Zeichnungsfig. 14 und 15 besitzt der Befestigungsabschnitt 63 eine Anlagerippe 69, die sich in Umfangsrichtung zu dem Rohrrahmen 34 des Zweirades erstreckt. Außerdem weist der Befestigungsabschnitt 63 noch die Tasche 74 auf. Eine Kunststoffbandage 108 taucht mit ihren verdickten Enden 72 in diese Tasche ein und wirkt zusammen mit der Anlagerippe als Klemmschelle. Die verdickten Enden 72 besitzen Bohrungen 73, in die Schrauben 42 mit selbstschneidendem Gewinde eingedreht werden können . Die Schrauben 42 werden dabei durch die Durchgangsbohrungen 75 der Trennwand 61 hindurchgeführt. Zum Festziehen kann dann beispielsweise ein Schraubendreher durch den Schlitz 96 hindurchgeführt werden.

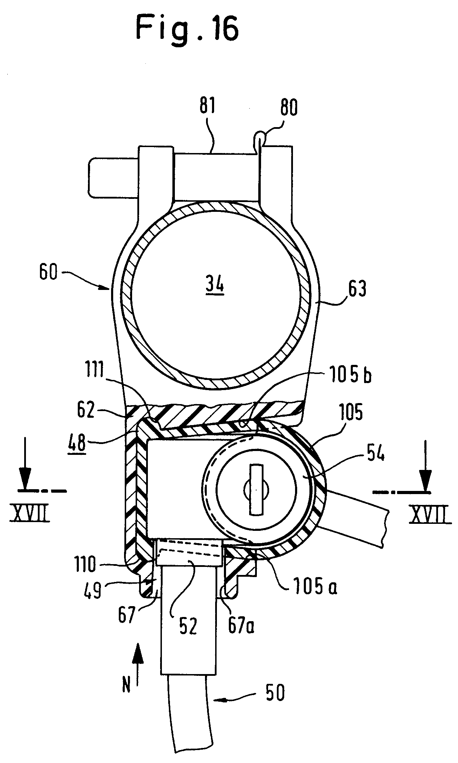

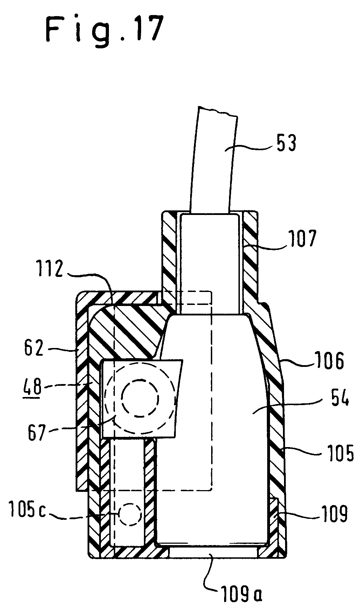

Das in den Figuren 16 und 17 gezeigte Schloß 50 entspricht dem in den Zeichnungsfig. 3 und 4 gezeigten und beschriebenen Schloß 50. Das Schließwerksgehäuse 54 ist im wesentlichen vollständig von einer zweiteiligen Kunststoffkappe 105 abgedeckt. Die Kunststoffkappe 105 umfaßt eine im wesentlichen rohrförmige Hülse 106 mit einer Durchtrittsöffnung 107 für das Kabel 53 und einer Durchtrittsöffnung für das Riegelstück 52. Damit die Kunststoffkappe 105 an dem Schließwerksgehäuse fixiert ist, weist die Kappe 105 Verrastungslöcher 105 c auf, durch die ein nicht gezeigter Bolzen hindurchgesteckt und gesichert wird. Das Schließwerksgehäuse 54 kann dann nicht mehr aus der Kappe 105 herausgezogen werden. Der Durchtrittsöffnung 107 für das Kabel 53 gegenüberliegend ist ein Deckel 109 vorgesehen, der die Kunststoffkappe 105 verschließt. Er besitzt eine Durchbrechung 109a durch die der Betätigungsschlüssel hindurchtreten kann. Damit die Kunststoffkappe 105 für verschieden große Schlösser 50 verwendet werden kann, weisen ihre Seitenwände 105a und 105b zueinander. Sie wirken dadurch als Feder und können entsprechend der Größe des Schließwerksgehäuses aufgeweitet werden. An der Außenseite der Seitenwände 105a, 105b besitzt die Kunststoffkappe 105 Führungsmittel 111, die zusammen mit entsprechend geformten Führungsmitteln 110 des Aufnahmeabschnitts 62 die Linearführung 48 bilden. Ebenso wie bei den bisher beschriebenen Ausführungsbeispielen sind auch hier funktionsgleiche Elemente mit den gleichen Bezugszeichen wie in den Zeichnungsfig. 3 bis 15 bezeichnet.

Die vorzugsweise aus Kunststoff hergestellte, insbesondere gespritzte Halterung 60 bildet einen Quader, der innen hohl ist. Der in Richtung des Rahmenrohres 34 verlaufende Querschnitt dieses inneren Hohlraumes besitzt die Form eines Trapezes. An die kürzere der parallelen Trapezseiten schließen sich die Führungsmittel 110 an. Zur Begrenzung des Führungsweges ist als Anschlag 78 die Begrenzungsfläche 112 des Innenraumes des Aufnahmeabschnittes 62 vorgesehen. Damit der die Durchtrittsöffnung 107 für das Kabel 53 bildende Rappenbereich an der Bodenfläche 112 beim Einführen des Schließwerksgehäuses 54 in die Halterung 60 vorbeifahren kann, besitzt diese eine entsprechende Einformung. Außerdem weist der Aufnahmeabschnitt 62 die Durchbrechung 67 für das Riegelstück 52 auf.

Zum Fixieren des Schließwerksgehäuses 54 wird dieses zunächst in der Zeichenfig. 16 in die Zeichenebene hineinbewegt, bis die Kunststoffkappe 105 an der Bodenfläche 112 (Fig 17) anschlagt. Anschließend kann das Riegelstück (siehe 52 im Fig 7) durch die Einführungsbohrung 67 in Richtung des Pfeiles N in Zeichnungsfig. 16 in den Steckführungskanal (siehe 57 im Fig 4) eingeführt und verrastet werden. Auch hier dient die Umfangsfläche 67a als zweiter Anschlag bei 49.

Der Befestigungsabschnitt 63 dieses Ausführungsbeispieles entspricht dem in den Zeichnungsfig. 5 und 6 beschriebenen Ausführungsbeispiels.

In allen beschriebenen Ausführungsbeispielen bilden der Aufnahmeabschnitt 62 und der Befestigungsabschnitt 63 eine Einheit. Ebenso ist es aber möglich, den Aufnahmeabschnitt 62 von dem Befestigungsabschnitt 63 getrennt und beispielsweise aus unterschiedlichem Material zu fertigen und diese erst anschließend zusammenzufügen. Dies kann entweder kurz nach der Herstellung geschehen oder aber bei der Anbringung an den Zweiradrahmen.

Ein wesentliches Merkmal der Erfindung ist es, daß die verschiedenen Halterungen mit unterschiedlichen Schlössern und unterschiedlichen Befestigungseinrichtungen kombiniert werden können. Deshalb stellen die in den Ausführungsbeispielen beschriebenen Kombinationen aus Halterungen, Schlössern und Befestigungseinrichtungen keine Festlegung dar. Vielmehr können sie untereinander kombiniert werden. Außerdem besteht die Möglichkeit, daß die Schlösser auch ohne die Kunststoffkappen 88 mit entsprechenden Führungsmitteln versehen werden. Sie bilden dann direkt zusammen mit den Führungsmitteln der Halterung die Linearführung 48.

Entsprechend den Ausführungsformen nach den Figuren 2 und 3 betrifft die Erfindung weiter eine Halterung zur Anbringung an einem Fahrzeugrahmen für die Aufnahme eines Schlosses, insbesondere eines Ringschlosses, während der Fahrt, umfassend eine Befestigungsaufnahme, mit welcher das Schloß durch Zusammenkuppeln von zwei Schloßteilen formschlüssig verbindbar ist.

Unabhängig von den übrigen Merkmalen der Erfindung soll dabei der Gedanke geschützt sein, daß die Befestigungsaufnahme an dem Fahrzeugrahmen durch lösbare Befestigungsmittel befestigbar ist, deren Lösung bei Verbindung des Schlosses mit der Befestigungsaufnahme unterbunden ist. Entsprechend den Figuren 2 und 3 soll dieser Gedanke insbesondere in der Weise weitergebildet werden, daß die Befestigungsaufnahme durch eine Teilringschelle unter Vermittlung von mindestens einer, vorzugsweise zwei Befestigungsschrauben verbindbar ist, wobei die Drehangriffsstellen dieser Befestigungsschrauben bei Verbindung des Schlosses mit der Befestigungsaufnahme durch mindestens einen der Schloßteile abgedeckt ist.

Durch diese Maßnahmen wird erreicht, daß nach Ankuppeln des Schlosses an die Befestigungsaufnahme diese Befestigungsaufnahme nicht mehr, jedenfalls aber nicht ohne Zerstörung von dem Fahrradrahmen gelöst werden kann und somit eine unbefugte Entnahme des Schlosses samt seiner Halterung von dem Rahmen unterbunden ist.

Die Drehangriffsstellen der Befestigungsschrauben können insbesondere durch das Schließwerkgehäuse abgedeckt sein, da dieses in der Regel ohnehin mit einer relativ großen Fläche an dem zweiradrahmenseitigen Teil der Halterung anliegt und deshalb eine große Abdeckfläche für die Befestigungsmittel bietet.

## Patentansprüche

1. Kombination einer zweiradrahmenseitigen Kabelschloßhalterung (60) mit einem von dieser betriebsmäßig trennbaren Kabelschloß (50),
wobei an dem einen Ende eines Schließkabels (53) des Kabelschlosses (50) ein in einem Schließwerksgehäuse (54) untergebrachtes Schließwerk (51) angeordnet ist und am anderen Ende des Schließkabels (53) ein mit dem Schließwerk (51) kuppelbares Riegelstück (52) angebracht ist und
wobei Schließwerk (51) und Riegelstück (52) im gekuppelten Zustand an der Halterung (60) im wesentlichen unbeweglich festgelegt sind,
dadurch gekennzeichnet,
daß an der Halterung (60) eine drehsichernde und kippsichernde Linearführung (48) zum Zusammenwirken mit einer Linearführungsfläche (55) des Schließwerksgehäuses (54) und eine den Einführungsweg des Schließwerksgehäuses (54) begrenzende Anschlagfläche (78) vorgesehen sind,
daß das Riegelstück (52) in einer die Linearführungsrichtung querenden Richtung in das Schließwerk (51) einkuppelbar ist und
daß das Schließwerksgehäuse (54) in der Linearführung (48) durch Reibschluß oder durch Anlage des Riegelstücks (52) an einer weiteren Anschlagfläche (bei 49) der Halterung (60) und/oder durch Verrastung gesichert ist.

2. Kombination nach Anspruch 1,
dadurch gekennzeichnet,
daß bei in der Halterung (60) aufgenommenem Schließwerk (51) ein Schlüsselaufnahmeschlitz (51a) dieses Schließwerks (51) für die Schlüsseleinführung zuganglich ist.

3. Kombination nach Anspruch 1 oder 2,
dadurch gekennzeichnet,
daß die Linearführung (48) als eine Schwalbenschwanzführung (89,80) ausgebildet ist.

4. Kombination nach Anspruch 1 oder 2,
dadurch gekennzeichnet,
daß die Linearführung von einer Durchbrechung (77) einer an der Halterung (60) ausgebildeten Positionierungsfläche (68) gebildet ist.

5. Kombination nach Anspruch 4,
dadurch gekennzeichnet,
daß die Durchbrechung (77) einen rechtwinkeligen, vorzugsweise quadratischen Querschnitt aufweist.

6. Kombination nach Anspruch 4 oder 5,
dadurch gekennzeichnet,
daß die Positionierungsfläche (68) von einem Dünnschichtmaterial, vorzugsweise Blech, gebildet ist.

7. Kombination nach Anspruch 4 oder 5,
dadurch gekennzeichnet,
daß die Positionierungsfläche (68) an einem gespritzten Kunststoffteil (60) ausgebildet ist.

8. Kombination nach einem der Ansprüche 1-7,
dadurch gekennzeichnet,
daß die weitere Anschlagfläche durch die Umfangsfläche (67a,91a,97a) einer in der Halterung (60) angeordneten Einführungsbohrung (67,91,97) für das Riegelstück (52) gebildet ist.

9. Kombination nach einem der Ansprüche 1-7,
dadurch gekennzeichnet,
daß die weitere Anschlagfläche an einem an der Halterung (60) angebrachten Steg (95) angeordnet ist.

10. Kombination nach Anspruch 9,
dadurch gekennzeichnet,
daß der Steg (95) das Schließwerksgehäuse (54') in einer zur Linearführungsrichtung im wesentlichen orthogonalen Querebene wenigstens teilweise umgreift und dem Riegelstück (52) nur auf dessen in Ausschubrichtung vorderer Seite gegenüberliegt.

11. Kombination nach Anspruch 10,
dadurch gekennzeichnet,
daß der Steg (95) im Bereich des Riegelstücks (52) frei endet.

12. Kombination nach Anspruch 6,
dadurch gekennzeichnet,
daß die weitere Anschlagfläche durch die von der Positionierungsfläche (68) abgelegene Rückseite des Dünnschichtmaterials gebildet ist.

13. Kombination nach einem der Ansprüche 4 - 12,
dadurch gekennzeichnet,
daß die Positionierungsfläche (68) muldenförmig ausgebildet ist.

14. Kombination nach einem der Ansprüche 1-13,
dadurch gekennzeichnet,
daß die Halterung (60) zur Durchführung des Schließkabels (53) geschlitzt (bei 96) ausgeführt ist.

15. Kombination nach einem der Ansprüche 1-14,
dadurch gekennzeichnet,
daß die Halterung (60) an dem Zweiradrahmen durch lösbare Befestigungsmittel (36,42) befestigbar ist, deren Lösung bei Verbindung des Kabelschlosses (50) mit der Halterung (60) unterbunden ist.

16. Kombination nach Anspruch 15,
dadurch gekennzeichnet,
daß die Befestigungsmittel eine mit der Halterung (60) durch mindestens eine, vorzugsweise zwei, Befestigungsschrauben (42) verbindbare Teilringschelle (36) umfassen, wobei Drehangriffsstellen (44) dieser Befestigungsschrauben (42) bei Verbindung des Kabelschlosses mit der Halterung (60) abgedeckt sind.

17. Kombination nach Anspruch 16,
dadurch gekennzeichnet,
daß die Drehangriffsstellen (44) der Befestigungsschrauben (42) durch das Schließwerkgehäuse (54) abgedeckt sind.

18. Kombination nach einem der Ansprüche 1 - 17,
dadurch gekennzeichnet,
daß zwischen zwei Klemmsegmenten einer Klemmschelle mindestens eine Hülse (81) einfügbar ist, durch die wenigstens eine Klemmschraube (42) beim Verspannen hindurchtritt.

19. Kombination nach Anspruch 18,
dadurch gekennzeichnet,
daß die mindestens eine Hülse (81) mit einem Klemmsegment über ein Scharnier (80) ggf. abtrennbar verbunden ist.

## Claims

1. Combination of a cable lock support (60) at the bicycle frame side with a cable lock (50) operatively separable from it, wherein, at the one end of a locking cable (53) of the cable lock (50), a lock mechanism (51) housed in a lock mechanism casing (54) is disposed and, at the other end of the locking cable (53), a bolt piece (52) which can be coupled to the lock mechanism (51) is fitted, and wherein lock mechanism (51) and bolt piece (52), in the coupled state, are secured substantially immovably to the support (60), characterized in that, on the support (60) a rotation-preventing and tilt-preventing linear guide (48) for cooperation with a linear guide surface (55) of the lock mechanism casing (54) and an abutment surface (78) which limits the entry travel of the lock mechanism casing (54) are provided, that the bolt piece (52) can be coupled into the lock mechanism (51) in a direction transversely to the linear guide direction, and that the lock mechanism casing (54) is secured in the linear guide (48) by frictional locking or by bearing of the bolt piece (52) against a further abutment surface (at 49) of the support (60) and/or by locating engagement.

2. Combination according to Claim 1, characterized in that, when the lock mechanism (51) is seated in the support (60), a key receiving slit (51a) of this lock mechanism (51) is accessible for inserting the key.

3. Combination according to Claim 1 or 2, characterized in that the linear guide (48) is formed as a dovetail guide (89, 80).

4. Combination according to Claim 1 or 2, characterized in that the linear guide is formed by a penetration (77) of a positioning surface (68) formed on the support (60).

5. Combination according to Claim 4, characterized in that the penetration (77) has a rectangular, preferably square cross-section.

6. Combination according to Claim 4 or 5, characterized in that the positioning surface (68) is formed of a thin-layer material, preferably metal sheet.

7. Combination according to Claim 4 or 5, characterized in that the positioning surface (68) is formed on a moulded plastics component (60).

8. Combination according to one of Claims 1 to 7, characterized in that the further abutment surface is formed by the peripheral surface (67a, 91a, 97a) of a lead-in bore (67, 91, 97) for the bolt piece (52) disposed in the support (60).

9. Combination according to one of Claims 1 to 7, characterized in that the further abutment surface is disposed on a bar (95) mounted on the support (60).

10. Combination according to Claim 9, characterized in that the bar (95) fits at least partly around the lock mechanism casing (54') in a transverse plane substantially perpendicular to the linear guide direction and is opposite the bolt piece (52) only on its side which is at the front in the expulsion direction.

11. Combination according to Claim 10, characterized in that the bar (95) terminates freely in the region of the bolt piece (52).

12. Combination according to Claim 6, characterized in that the further abutment surface is formed by the rear face of the thin-layer material remote from the positioning surface (68).

13. Combination according to one of Claims 4 to 12, characterized in that the positioning surface (68) is trough-shaped.

14. Combination according to one of Claims 1 to 13, characterized in that the support (60) is constructed slit (at 96) to permit passage of the locking cable (53).

15. Combination according to one of Claims 1 to 14, characterized in that the support (60) can be secured to the bicycle frame by releasable fixing means (36, 42), the release of which is impossible when the cable lock (50) is connected to the support (60).

16. Combination according to Claim 15, characterized in that the fixing means comprise a partly annular collar (36), which can be connected to the support (60) by at least one, preferably two, fixing screws (42), rotating tool application points (44) of these fixing screws (42) being covered when the cable lock is connected to the support (60).

17. Combination according to Claim 16, characterized in that the rotating tool application points (44) of the fixing screws (42) are covered by the lock mechanism casing (54).

18. Combination according to one of Claims 1 to 17, characterized in that, between two clamping segments of a clamping collar, at least one sleeve (81) can be inserted, through which at least one clamping screw (42) passes during tightening up.

19. Combination according to Claim 18, characterized in that the at least one sleeve (81) is connected, possibly separably, to one clamping segment by a hinge (80).

## Revendications

1. Combinaison d'une fixation de serrure à câble (60) du côté du cadre d'un véhicule à deux roues, et d'une serrure à câble (50) pouvant être désolidarisé de celle-ci,
un mécanisme de verrouillage (51) étant monté dans un boîtier de mécanisme de verrouillage (54) à l'une des extrémités d'un câble de verrouillage (53) de la serrure à câble (50), et une pièce de verrouillage (52) pouvant être couplée avec le mécanisme de verrouillage (51) étant montée à l'autre extrémité du câble de verrouillage (53) et
le mécanisme de verrouillage (51) et la pièce de verrouillage (52) étant fixés, à l'état couplé, de manière sensiblement immobile sur la fixation (60);
caractérisée en ce que :
un guidage linéaire (48) empêchant toute rotation et tout basculement, est prévu sur la fixation (60) pour coopérer avec une surface (55) de guidage linéaire, du boîtier de mécanisme de verrouillage (54) et une surface de butée (78) est prévue, pour limiter la course d'introduction du boîtier de mécanisme de verrouillage (54),
en ce que la pièce de verrouillage (52) peut être couplée dans une direction perpendiculaire à la direction de guidage linéaire, dans le mécanisme de verrouillage (51), et
en ce que le boîtier de mécanisme de verrouillage (54) est fixé dans le guidage linéaire (48), par friction ou par appui de la pièce de verrouillage (52) sur une autre surface de butée (en 49) de la fixation (60) et/ou par encliquetage.

2. Combinaison selon la revendication 1,
caractérisée en ce que,
dans le mécanisme de verrouillage (51) logé dans la fixation (60) une fente (51a) destinée à recevoir une clé de ce mécanisme de verrouillage (51) est accessible pour introduire la clé.

3. Combinaison selon la revendication 1 ou 2,
caractérisée en ce que
le guidage linéaire (48) est conformé en queue d'aronde (89, 80).

4. Combinaison selon la revendication 1 ou 2,
caractérisée en ce que
le guidage linéaire est constitué par un perçage (77) dans une surface de positionnement (68) constituée sur la fixation (60).

5. Combinaison selon la revendication 4,
caractérisée en ce que
le perçage (77) présente une section à angles droits, de préférence carrée.

6. Combinaison selon la revendication 4 ou 5,
caractérisée en ce que
la surface de positionnement (68) est constituée d'un matériau en couche fine, de préférence en tôle.

7. Combinaison selon la revendication 4 ou 5,
caractérisée en ce que
la surface de positionnement (68) est formée sur une pièce en matière plastique injectée (60).

8. Combinaison selon l'une quelconque des revendications 1 à 7,
caractérisée en ce que
l'autre surface de butée est constituée par la surface périphérique (67a, 91a, 97a) d'un trou d'introduction (67, 91, 97) prévu pour la pièce de verrouillage (52) dans la fixation (60).

9. Combinaison selon l'une quelconque des revendications 1 à 7,
caractérisée en ce que
l'autre surface de butée est disposée sur une barrette (95) montée sur la fixation (60).

10. Combinaison selon la revendication 9,
caractérisée en ce que
la barrette (95) entoure au moins partiellement le boîtier de mécanisme de verrouillage (54') dans un plan perpendiculaire, sensiblement orthogonal, par rapport à la direction du guidage linéaire, et fait face à la pièce de verrouillage (52) seulement sur son côté avant, dans le sens de retrait.

11. Combinaison selon la revendication 10,
caractérisée en ce que
la barrette (95) comporte une extrémité libre, dans le secteur de la pièce de verrouillage (52).

12. Combinaison selon la revendication 6,
caractérisée en ce que
l'autre surface de butée est constituée par le dos du matériau en couche fine, éloigné de la surface de positionnement (68).

13. Combinaison selon l'une quelconque des revendications 4 à 12,
caractérisée en ce que
la face de positionnement (68) est constituée en forme d'auge.

14. Combinaison selon l'une quelconque des revendications 1 à 13,
caractérisée en ce que
la fixation (60) est conçue avec une fente (en 96) pour introduire le câble de verrouillage (53).

15. Combinaison selon l'une quelconque des revendications 1 à 14,
caractérisée en ce que
la fixation (60) peut être fixée sur le cadre du véhicule à deux roues par des moyens de fixation (36, 42) amovibles, dont le desserrage est rendu impossible lors de l'assemblage de la serrure à câble (50) avec la fixation (60).

16. Combinaison selon la revendication 15,
caractérisée en ce que
les moyens de fixation comportent un collier de serrage partiel (36) pouvant être relié avec la fixation (60) par au moins une, de préférence par deux vis de serrage (42), des points de prise pour la rotation (44) de ces vis de serrage (42) étant dissimulés lors de l'assemblage de la serrure à câble avec la fixation (60).

17. Combinaison selon la revendication 16,
caractérisée en ce que
les points de prise pour la rotation (44) des vis de serrage (42) sont dissimulés par le boîtier du mécanisme de verrouillage (54).

18. Combinaison selon l'une quelconque des revendications 1 à 17,
caractérisée en ce que
entre les segments de serrage d'un collier de serrage, au moins une douille (81) peut être insérée, dans laquelle pénètre au moins une vis de serrage (42), lors du serrage.

19. Combinaison selon la revendication 18,
caractérisée en ce que
la douille (81) est reliée avec un segment de serrage par une charnière (80) ou le cas échéant de manière amovible.
